# EUROPEAN PATENT APPLICATION

(11) **EP 3 468 079 A1**
(43) Date of publication of application: **10.04.2019**
(21) Application number: 16902873.5
(22) Date of filing: 11.08.2016
(51) Int. Cl.: H04J 14/06, H04B 10/532

(54) **COMMUNICATION SYSTEM FOR TWO PATHS OF TERAHERTZ WAVES**

(30) Priority: 25.05.2016 CN 201610353027
(71) Applicant: Shenzhen Institute of Terahertz Technology and Innovation Co., Ltd., Shenzhen, Guangdong 518000 (CN); China Communication Technology Co., Ltd., Shenzhen, Guangdong 518000 (CN)
(72) Inventor: YANG, Bin, Shenzhen, Guangdong 518000 (CN); ZHAO, Shukai, Shenzhen, Guangdong 518000 (CN); DING, Qing, Shenzhen, Guangdong 518000 (CN)
(74) Representative: Kaya, Erdem
(86) International application number: PCT/CN2016/094497
(87) International publication number: WO 2017/201886

(57) **Abstract**

This invention is applied to the field of terahertz communication and provides a two-path terahertz wave communication system, which comprises a terahertz wave generation module, a terahertz wave transmission channel connected with the output port of the terahertz generation module, and a terahertz wave receiving module connected with the output port of the terahertz wave transmission channel. According to the system disclosed by the invention, one path of optical signal source is converted into one path of horizontally polarized terahertz wave and one path of perpendicularly polarized terahertz wave and then are combined into one path by the terahertz wave generation module for transmission via the terahertz wave transmission channel, and the horizontally polarized terahertz wave and the perpendicularly polarized terahertz wave are re-divided into two paths through the terahertz wave receiving module so as to be received respectively. The two-path terahertz wave communication can be realized, and the rate and the spectrum utilization efficiency of the terahertz wave communication are improved.

## Description

### TECHNICAL FIELD

The present invention relates to terahertz communication field, more particularly, to a two-path terahertz wave communication system.

### BACKGROUND

Terahertz wave is an electromagnetic wave that ranges in frequency from 0.1THz to 10THz. Because terahertz wave has the advantages of high transmission rate, good directivity, high safety, low scattering and good penetrability, it is widely used in communication field to transmit information.

However, the existing terahertz wave communication system can only realize single path terahertz wave communication and the communication rate is low.

### SUMMARY

The present invention aims to provide a two-path terahertz wave communication system to solve the problem that the existing terahertz wave communication system can only realize single path terahertz wave communication and the communication rate is low.

The present invention can be realized by a two-path terahertz wave communication system, which comprises:
a terahertz wave generation module, converting one path of optical signal source into one path of horizontally polarized terahertz wave and one path of perpendicularly polarized terahertz wave, combining the horizontally polarized terahertz wave and the perpendicularly polarized terahertz wave into one path, and outputting it;
a terahertz wave transmission channel, connected to the output port of the terahertz generation module, transmitting the combined horizontally polarized terahertz wave and perpendicularly polarized terahertz wave; and
a terahertz wave receiving module, connected to the output port of the terahertz wave transmission channel, re-dividing the combined horizontally polarized terahertz wave and perpendicularly polarized terahertz wave into two paths so as to be received respectively.

Preferably, the terahertz wave generation module comprises:
an optical fiber beamsplitter, dividing the one path of optical signal source into two paths of optical signal;
a first terahertz wave generation unit, connected to the first optical output port of the optical fiber beamsplitter by optical fiber, converting one of the two paths of optical signal into the horizontally polarized terahertz wave;
a second terahertz wave generation unit, connected to the second optical output port of the optical fiber beamsplitter by optical fiber, converting the other of the two paths of optical signal into the perpendicularly polarized terahertz wave; and
a first polarized beamsplitter, arranged in a free space and located at the output port of the first terahertz wave generation unit and the output port of the second terahertz wave generation unit, combining the horizontally polarized terahertz wave and the perpendicularly polarized terahertz wave into one path and outputting it.

Preferably, the first terahertz wave generation unit comprises:
a first electro-optical modulator, connected to the first optical output port of the optical fiber beamsplitter by optical fiber, modulating one of the two paths of optical signal into a first modulated optical signal;
a first terahertz wave generator, connected to the first electro-optical modulator by optical fiber, converting the first modulated optical signal into a first terahertz wave; and
a horizontal polarizer, arranged at the output port of the first terahertz wave generator, filtering the first terahertz wave into the horizontally polarized terahertz wave.

Preferably, the second terahertz wave generation unit comprises:
a second electro-optical modulator, connected to the second optical output port of the optical fiber beamsplitter by optical fiber, modulating the other of the two paths of optical signal into a second modulated optical signal;
a second terahertz wave generator, connected to the second electro-optical modulator by optical fiber, converting the second modulated optical signal into a second terahertz wave; and
a perpendicular polarizer, arranged at the output port of the second terahertz wave generator, filtering the second terahertz wave into the perpendicularly polarized terahertz wave.

Preferably, the terahertz wave generation module also comprises a fiber amplifier, which is connected to the optical input port of the optical fiber beamsplitter and is used to amplify the optical signal source.

Preferably, the terahertz wave transmission channel comprises:
a free space, transmitting the horizontally polarized terahertz wave and the perpendicularly polarized terahertz wave;
a first focusing lens, arranged at the input port of the free space, focusing the horizontally polarized terahertz wave and the perpendicularly polarized terahertz wave, so that the horizontally polarized terahertz wave and the perpendicularly polarized terahertz wave are transmitted in the free space; and
a second focusing lens, arranged at the output port of the free space, focusing the horizontally polarized terahertz wave and the perpendicularly polarized terahertz wave so as to output them to the terahertz wave receiving module.

Preferably, the terahertz wave receiving module comprises:
a second polarized beamsplitter, connected to the output port of the terahertz wave transmission channel, re-dividing the combined horizontally polarized terahertz wave and perpendicularly polarized terahertz wave into one path of horizontally polarized terahertz wave and one path of perpendicularly polarized terahertz wave, and outputting them respectively;
a first terahertz wave receiving unit, connected to the first output port of the second polarized beamsplitter, receiving the horizontally polarized terahertz wave; and
a second terahertz wave receiving unit, connected to the second output port of the second polarized beamsplitter, receiving the perpendicularly polarized terahertz wave.

Preferably, the first terahertz wave receiving unit comprises a first terahertz wave detector arranged at the first output port of the second polarized beamsplitter; the second terahertz wave receiving unit comprises a second terahertz wave detector arranged at the second output port of the second polarized beamsplitter.

Preferably, the first terahertz wave receiving unit also comprises a first pre-amplifier and a first limiting amplifier, which are connected in sequence and arranged at the output port of the first terahertz wave detector; the second terahertz wave receiving unit also comprises a second pre-amplifier and a second limiting amplifier, which are connected in sequence and arranged at the output port of the second terahertz wave detector.

Compared with the existing technology, the present invention has the following advantages:
one path of optical signal source is converted into one path of horizontally polarized terahertz wave and one path of perpendicularly polarized terahertz wave and then are combined into one path by the terahertz wave generation module for transmission via the terahertz wave transmission channel, and the horizontally polarized terahertz wave and the perpendicularly polarized terahertz wave are re-divided into two paths through the terahertz wave receiving module so as to be received respectively; the two-path terahertz wave communication can be realized, and the rate and the spectrum utilization efficiency of the terahertz wave communication are improved.

### BRIEF DESCRIPTION OF THE DRAWINGS

FIG. 1 is a basic structure diagram of a two-path terahertz wave communication system according to an embodiment of the present invention.
FIG. 2 is a concrete structure diagram of the two-path terahertz wave communication system according to an embodiment of the present invention.
FIG. 3 is a concrete structure schematic diagram of the two-path terahertz wave communication system according to an embodiment of the present invention.

### DETAILED DESCRIPTION

The detailed description set forth below in connection with the appended drawings and embodiments is intended to facilitate better understanding of the purpose, the technical solutions and the advantages of the present invention. It should be noted that, the embodiments described herein are just for explaining the present invention, and cannot be construed as a limit to the present invention.

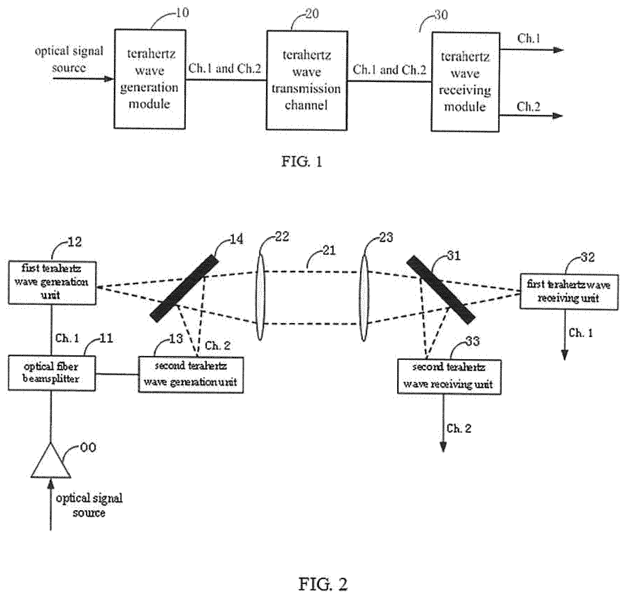

As shown in FIG. 1, this embodiment provides a two-path terahertz wave communication system, which comprises a terahertz wave generation module 10, a terahertz wave transmission channel 20, and a terahertz wave receiving module 30 connected sequentially.

The terahertz wave generation module 10 is used to convert one path of optical signal source into one path of horizontally polarized terahertz wave Ch.1 and one path of perpendicularly polarized terahertz wave Ch.2, combine the horizontally polarized terahertz wave Ch.1 and the perpendicularly polarized terahertz wave Ch.2 into one path, and output it.

The terahertz wave transmission channel 20 is connected with the output port of the terahertz generation module 10 and is used to transmit the combined horizontally polarized terahertz wave Ch.1 and perpendicularly polarized terahertz wave Ch.2.

The terahertz wave receiving module 30 is connected with the output port of the terahertz wave transmission channel 20 and is used to re-divide the combined horizontally polarized terahertz wave Ch.1 and perpendicularly polarized terahertz wave Ch.2 into one path of horizontally polarized terahertz wave Ch.1 and one path of perpendicularly polarized terahertz wave Ch.2 so as to be received respectively.

One path of optical signal source is converted into one path of horizontally polarized terahertz wave and one path of perpendicularly polarized terahertz wave by the terahertz wave generation module and transmitted by the terahertz wave transmission channel, so as to realize the two-path terahertz wave communication and improve the transmission rate.

Re-dividing the combined horizontally polarized terahertz wave and perpendicularly polarized terahertz wave into one path of horizontally polarized terahertz wave and one path of perpendicularly polarized terahertz wave so as to be received respectively by the terahertz wave receiving module at the terahertz wave receiving end, so that the rake reception of two paths terahertz waves can be realized according to different polarizations and the spectrum utilization efficiency is improved without distinguishing the two paths terahertz waves by time.

As shown in FIG. 2, in this embodiment, the terahertz wave generation module 10 comprises a fiber amplifier 00, an optical fiber beamsplitter 11, a first terahertz wave generation unit 12, a second terahertz wave generation unit 13 and a first polarized beamsplitter 14.

The fiber amplifier 00 is connected to the optical input port of the optical fiber beamsplitter 11 and is used to amplify the optical signal source. The optical fiber beamsplitter 11 is used to divide the one path of optical signal source into two paths of optical signal. The first terahertz wave generation unit 12 is connected to the first optical output port of the optical fiber beamsplitter 11 by optical fiber and is used to convert one of the two paths of optical signal into the horizontally polarized terahertz wave Ch.1. The second terahertz wave generation unit 13 is connected to the second optical output port of the optical fiber beamsplitter 11 by optical fiber and is used to convert the other of the two paths of optical signal into the perpendicularly polarized terahertz wave Ch.2. The first polarized beamsplitter 14 is arranged in a free space and located at the output port of the first terahertz wave generation unit 12 and the output port of the second terahertz wave generation unit 13 and is used to combine the horizontally polarized terahertz wave Ch.1 and the perpendicularly polarized terahertz wave Ch.2 into one path and output it.

The terahertz wave transmission channel 20 comprises a free space 21, a first focusing lens 22 and a second focusing lens 23.

The free space 21 is used to transmit the combined horizontally polarized terahertz wave Ch.1 and perpendicularly polarized terahertz wave Ch.2. The first focusing lens 22 is arranged at the input port of the free space 21 and is used to focus the horizontally polarized terahertz wave Ch.1 and the perpendicularly polarized terahertz wave Ch.2 for the first time, so that the horizontally polarized terahertz wave Ch.1 and the perpendicularly polarized terahertz wave Ch.2 can be transmitted in the free space. The second focusing lens 23 is arranged at the output port of the free space 21 and is used to focus the horizontally polarized terahertz wave Ch.1 and the perpendicularly polarized terahertz wave Ch.2 for the second time, so as to focus the horizontally polarized terahertz wave Ch.1 and the perpendicularly polarized terahertz wave Ch.2 and output them to the terahertz wave receiving module 30.

The terahertz wave receiving module 30 comprises a second polarized beamsplitter 31, a first terahertz wave receiving unit 32 and a second terahertz wave receiving unit 33.

The second polarized beamsplitter 31 is connected to the output port of the terahertz wave transmission channel 20, i.e. the out-light surface of the second focusing lens 23, and is used to re-divide the combined horizontally polarized terahertz wave Ch.1 and perpendicularly polarized terahertz wave Ch.2 into one path of horizontally polarized terahertz wave Ch.1 and one path of perpendicularly polarized terahertz wave Ch.2, and output them respectively. The first terahertz wave receiving unit 32 is connected to the first output port of the second polarized beamsplitter 31 and is used to receive the horizontally polarized terahertz wave Ch.1. The second terahertz wave receiving unit 33 is connected to the second output port of the second polarized beamsplitter 31 and is used to receive the perpendicularly polarized terahertz wave Ch.2.

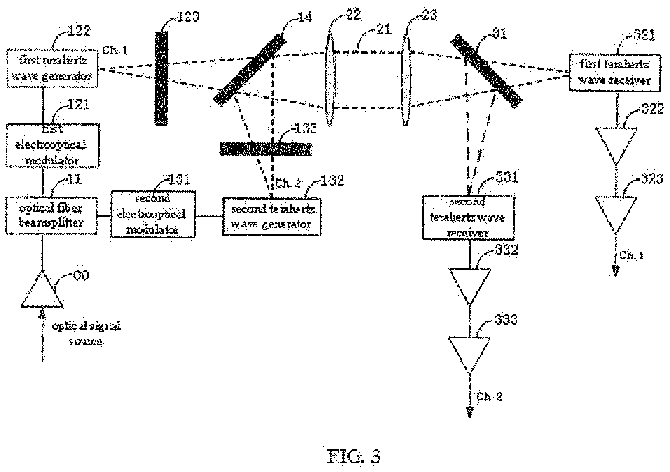

As shown in FIG. 3, in this embodiment, the first terahertz wave generation unit 12 comprises a first electro-optical modulator 121, a first terahertz wave generator 122 and a horizontal polarizer 123; the second terahertz wave generation unit 13 comprises a second electro-optical modulator 131, a second terahertz wave generator 132 and a perpendicular polarizer 133.

The first electro-optical modulator 121 is connected to the first optical output port of the optical fiber beamsplitter 11 by optical fiber and is used to modulate one of the two paths of optical signal into a first modulated optical signal. The first terahertz wave generator 122 is connected to the first electro-optical modulator 121 by optical fiber and is used to convert the first modulated optical signal into a first terahertz wave. The horizontal polarizer 123 is arranged at the output port of the first terahertz wave generator 122 and is used to filter the first terahertz wave into the horizontally polarized terahertz wave Ch.1.

The second electrooptical modulator 131 is connected to the second optical output port of the optical fiber beamsplitter 11 by optical fiber and is used to modulate the other of the two paths of optical signal into a second modulated optical signal. The second terahertz wave generator 132 is connected to the second electro-optical modulator 131 by optical fiber and is used to convert the second modulated optical signal into a second terahertz wave. The perpendicular polarizer 133 is arranged at the output port of the second terahertz wave generator 132 and is used to filter the second terahertz wave into the perpendicularly polarized terahertz wave Ch.2.

In the specific application, the first electro-optical modulator 121 and the second electro-optical modulator 131 could be EMO electro-optical modulator, phase modulator or amplitude modulator; the first terahertz wave generator 122 and the second terahertz wave generator 132 could be uni-traveling-carrier photo-diode(UTC-PD).

The first terahertz wave receiving unit 32 comprises a first terahertz wave detector 321 arranged at the first output port of the second polarized beamsplitter 31; the second terahertz wave receiving unit 33 comprises a second terahertz wave detector 331 arranged at the second output port of the second polarized beamsplitter 31.

In the specific application, both the first terahertz wave detector 321 and the second terahertz wave detector 331 are terahertz wave detectors represented by schottky barrier diode (SBD).

In this embodiment, the first terahertz wave receiving unit 32 also comprises a first pre-amplifier 322 and a first limiting amplifier 323, which are connected in sequence and arranged at the output port of the first terahertz wave detector 321; the second terahertz wave receiving unit 33 also comprises a second pre-amplifier 332 and a second limiting amplifier 333, which are connected in sequence and arranged at the output port of the second terahertz wave detector 331.

The two-path terahertz wave communication system provided by the present invention could convert one path optical signal source into two paths terahertz waves with different polarization directions, so that the two-path terahertz wave communication can be realized. And in the specific application, the two paths terahertz waves could be distinguished by time, so that muti-path terahertz wave communication can be realized.

The above are merely preferred embodiments of the present invention, which cannot be construed as a limit to the present invention. Any amendment, substitution to same object and improvement in the spirit and principle of the present invention belong to the scope of the present invention.

## Claims

1. A two-path terahertz wave communication system, **characterized in that**, comprising:
a terahertz wave generation module, converting one path of optical signal source into one path of horizontally polarized terahertz wave and one path of perpendicularly polarized terahertz wave, combining the horizontally polarized terahertz wave and the perpendicularly polarized terahertz wave into one path, and outputting it;
a terahertz wave transmission channel, connected to the output port of the terahertz generation module, transmitting the combined horizontally polarized terahertz wave and perpendicularly polarized terahertz wave; and
a terahertz wave receiving module, connected to the output port of the terahertz wave transmission channel, re-dividing the combined horizontally polarized terahertz wave and perpendicularly polarized terahertz wave into two paths so as to be received respectively.

2. The two-path terahertz wave communication system of claim 1, **characterized in that**, the terahertz wave generation module comprises:
an optical fiber beamsplitter, dividing the one path of optical signal source into two paths of optical signal;
a first terahertz wave generation unit, connected to the first optical output port of the optical fiber beamsplitter by optical fiber, converting one of the two paths of optical signal into the horizontally polarized terahertz wave;
a second terahertz wave generation unit, connected to the second optical output port of the optical fiber beamsplitter by optical fiber, converting the other of the two paths of optical signal into the perpendicularly polarized terahertz wave; and
a first polarized beamsplitter, arranged in a free space and located at the output port of the first terahertz wave generation unit and the output port of the second terahertz wave generation unit, combining the horizontally polarized terahertz wave and the perpendicularly polarized terahertz wave into one path and outputting it.

3. The two-path terahertz wave communication system of claim 2, **characterized in that**, the first terahertz wave generation unit comprises:
a first electro-optical modulator, connected to the first optical output port of the optical fiber beamsplitter by optical fiber, modulating one of the two paths of optical signal into a first modulated optical signal;
a first terahertz wave generator, connected to the first electro-optical modulator by optical fiber, converting the first modulated optical signal into a first terahertz wave; and
a horizontal polarizer, arranged at the output port of the first terahertz wave generator, filtering the first terahertz wave into the horizontally polarized terahertz wave.

4. The two-path terahertz wave communication system of claim 2, **characterized in that**, the second terahertz wave generation unit comprises:
a second electro-optical modulator, connected to the second optical output port of the optical fiber beamsplitter by optical fiber, modulating the other of the two paths of optical signal into a second modulated optical signal;
a second terahertz wave generator, connected to the second electro-optical modulator by optical fiber, converting the second modulated optical signal into a second terahertz wave; and
a perpendicular polarizer, arranged at the output port of the second terahertz wave generator, filtering the second terahertz wave into the perpendicularly polarized terahertz wave.

5. The two-path terahertz communication system of claim 2, **characterized in that**, the terahertz wave generation module also comprises a fiber amplifier, which is connected to the optical input port of the optical fiber beamsplitter and is used to amplify the optical signal source.

6. The two-path terahertz wave communication system of claim 1, **characterized in that**, the terahertz wave transmission channel comprises:
a free space, transmitting the horizontally polarized terahertz wave and the perpendicularly polarized terahertz wave;
a first focusing lens, arranged at the input port of the free space, focusing the horizontally polarized terahertz wave and the perpendicularly polarized terahertz wave, so that the horizontally polarized terahertz wave and the perpendicularly polarized terahertz wave are transmitted in the free space; and
a second focusing lens, arranged at the output port of the free space, focusing the horizontally polarized terahertz wave and the perpendicularly polarized terahertz wave so as to output them to the terahertz wave receiving module.

7. The two-path terahertz wave communication system of claim 1, **characterized in that**, the terahertz wave receiving module comprises:
a second polarized beamsplitter, connected to the output port of the terahertz wave transmission channel, re-dividing the combined horizontally polarized terahertz wave and perpendicularly polarized terahertz wave into one path of horizontally polarized terahertz wave and one path of perpendicularly polarized terahertz wave, and outputting them respectively;
a first terahertz wave receiving unit, connected to the first output port of the second polarized beamsplitter, receiving the horizontally polarized terahertz wave; and
a second terahertz wave receiving unit, connected to the second output port of the second polarized beamsplitter, receiving the perpendicularly polarized terahertz wave.

8. The two-path terahertz wave communication system of claim 7, **characterized in that**, the first terahertz wave receiving unit comprises a first terahertz wave detector arranged at the first output port of the second polarized beamsplitter; the second terahertz wave receiving unit comprises a second terahertz wave detector arranged at the second output port of the second polarized beamsplitter.

9. The two-path terahertz wave communication system of claim 8, **characterized in that**, the first terahertz wave receiving unit also comprises a first pre-amplifier and a first limiting amplifier, which are connected in sequence and arranged at the output port of the first terahertz wave detector; the second terahertz wave receiving unit also comprises a second pre-amplifier and a second limiting amplifier, which are connected in sequence and arranged at the output port of the second terahertz wave detector.
